# EUROPEAN PATENT APPLICATION

(11) **EP 1 361 040 A1**
(43) Date of publication of application: **12.11.2003**
(21) Application number: 02009373.8
(22) Date of filing: 06.05.2002
(51) Int. Cl.: B29C 70/30, C08G 18/00, C08J 5/04

(54) **A process for producing a reinforced plastic**

(71) Applicant: INOAC CORPORATION, Nagoya-shi Aichi 450-0003 (JP)
(72) Inventor: Horii, Masaaki, K.K. Inoac Technical Center, Hadano-shi, Kanagawa (JP)
(74) Representative: HOFFMANN - EITLE

(57) **Abstract**

A process for producing a reinforced plastic by the polyurethane-based resin spray-up method is described, which comprises, in a process of producing a reinforced plastic comprising a polyurethane-based resin, treating a mold with a mold release agent, applying a gel layer thereto, hardening by allowing to stand at 40°C to 50°C for about 20 minutes and then spray-up moulding by using a two component urethane spray equipment, characterized by, in the step of mixing an isocyanate or a prepolymer, which is prepared from an isocyanate and a polyol, with a polyol, preliminarily adding a catalyst to the polyol component, spray-up moulding the blend by spraying onto a mold with the use of a spray gun provided with a glass chopper with or without adding glass fiber chopped strands, then curing as such at 40°C to 50°C for 15 to 35 minutes and demoulding followed by trimming and finishing.

## Description

### FIELD OF THE INVENTION

The present invention relates to reinforced plastics. More particularly, it relates to an improvement in reinforced plastics by the polyurethane spray-up method with or without adding glass fibers to be used as substitutes for glass fiber-reinforced plastics which have been broadly employed hitherto.

### BACKGROUND OF THE INVENTION

As synthetic resin components employed in glass fiber-reinforced plastics (FRPs) generally known hitherto, unsaturated polyester resins (GFRPs) are used at an overwhelmingly high frequency followed by epoxy resins (CFRPs) and aramid (AFRPs) in this order.

Examples of the forms of these reinforcing fibers include rovings, strands of continuous fibers, chopped strands made up of short fibers obtained by cutting strands in several mm to several ten mm length, filament mats in which continuous fibers are oriented at random and continuous strand mats employed as substitutes for filaments. These reinforcing fibers are used in the hand lay-up method and the press moulding method.

Also, use is made of chopped strand mats, i.e., sheet materials in which strands cut in about 50 mm length are oriented at random and bound with a thin binder and fabrics obtained by weaving yarns or rovings such as roving clothes, plain-woven clothes and stain-woven clothes.

Moreover, there are various forms of reinforcing fibers, for example, intermediate materials having a specific three-dimensional structure and materials processed into forms appropriate for injection moulding or press moluding.

Major examples of the method of moulding reinforced plastics employed widely include the hand lay-up method in which either a concave mold or a convex mold is treated with a surface release agent and then fabrics or chop mats are laminated and impregnated while applying a resin, the spray-up method in which withdrawn rovings are cut with a chopper and blended with a resin followed by spraying onto the surface of a mold, and the resin injection method in which a reinforcing fiber is preliminarily put into a two-piece mold made of FRP and, after closing the mold, a resin is injected thereinto from an injection port.

The techniques for spraying unsaturated polyester resins are described, for example, in Japanese Laid-Open Publication Nos. 139787/2001 and 300376/1996, FRP Construction Design Handbook, pp. 322-323, edited by Aggregate Corporation, Reinforced Plastic Association, (September, 1994) and FRP Introductory Book, pp. 74-75, edited by Aggregate corporation, Reinforced Plastic Association, (April, 1992).

In addition, there are other methods such as the press moulding method with the use of a mold, the pressure bag method, the autoclave method and the wet filament winding method in which a filament is wound around a mandrel under impregnation of a resin.

FPRs are applicable over an extremely broad scope including automobiles, ships, construction, housing materials, containers, sport instruments and medical instruments.

Although use has been made of FRPs containing the unsaturated polyester resins as described above in producing resin products such as automotive bumpers, side spoilers, covers for constructional machines and bathtubs on a minor scale, several problems have been pointed out hitherto.

Namely, the problems which have been pointed out concerning FRPs with the use of the unsaturated polyester resins (in particular, products produced by the hand lay-up method or the spray-up method) are, for example, as follows: (1) in mold-shaping, the a day's productivity is restricted to 1 or 2 shots per mold; (2) the process for producing an FRP with the use of an unsaturated polyester resin essentially involves a troublesome and time-consuming step of defoaming; (3) in the course of moulding, harmful organic components (for example, styrene monomers) are vaporized and thus cause a problem of public pollution in the working environment; and (4) in two component spraying a polyurethane-based resin to an FRP with the use of an unsaturated polyester resin, only an extremely poor adhesiveness can be established.

As noteworthy means of solving these many problems, there has been known a process for producing a reinforced plastic by the spray-up method of a urethane-based resin. Also, attempts have been made to improve the adhesiveness by spraying urethane two component surface-coating thereon.

Although the spray-up method with the use of a polyurethane-based resin has been publicly known as an existing technique, there still remain the following problems in the step of mixing a prepolymer with a polyol. For example, (1) because of an insufficient rigidity, the obtained product has poor functions as a reinforced plastic and undergoes deformation due to its own weight with the passage of time; (2) unless the content of glass fiber is regulated to 10% by weight or less, a moulded article becomes porous and less solid, which makes it impossible to add a larger amount of the glass fiber, thereby essentially resulting in insufficient rigidity and strength; and (3) an only poor adhesiveness is achieved with the two component spray coating of the polyurethane-based resin.

### SUMMARY OF THE INVENTION

Under these circumstances, the present inventors have conducted intensive studies in order to provide a process for producing a reinforced plastic whereby various problems encountering in the existing unsaturated polyester resin-reinforced plastics regardless of the addition of glass fibers and the spray-up methods attempted hitherto by using polyurethane-based resins can be overcome. As a result, they have successfully developed an improved FRP technique with the use of a polyurethane-based resin whereby a strength comparable or even superior to unsaturated polyester resin-reinforced plastics can be achieved without resort to defoaming step and without evolving any toxic gas and a high a day's productivity of 5 to 8 shots per mold can be established.

The constitution of the present invention is as follows.
(1) A process for producing a reinforced plastic by the polyurethane-based resin spray-up method which comprises, in a process of producing a reinforced plastic comprising a polyurethane-based resin, treating a mold with a mold release agent, applying a gel layer thereto, hardening by allowing to stand at 40°C to 50°C for about 20 minutes and then spray-up moulding by using a two component urethane spray equipment, characterized by, in the step of mixing an isocyanate or a prepolymer, which is prepared from an isocyanate and a polyol, with a polyol, preliminarily adding a catalyst to the polyol component, spray-up moulding the blend by spraying onto a mold with the use of a spray gun provided with a glass chopper with or without adding glass fiber chopped strands, then curing as such at 40°C to 50°C for 15 to 35 minutes and demoulding followed by trimming and finishing.
(2) The process for producing a reinforced plastic as described in (1) characterized by, in the step of mixing the prepolymer with the polyol, preliminarily adding as the catalyst 2-methyl-1,4-diazabicyclo[2,2,2]octane or lead octylate to the polyol component.
(3) The process for producing a reinforced plastic as described in (1) characterized in that the isocyanate is an isocyanate prepolymer obtained by mixing or reacting an aliphatic or aromatic diisocyanate or isocyanate with a polyol.
(4) The process for producing a reinforced plastic as described in (1) characterized in that the polyol is a polyester, a polyether polyol or a polyether polyamine for urethane such as a polyester, a polyether, an adipic acid-based polyester, a dimeric acid-based polyester, a diol, a triol, a tetraol or a hexaol.

### BRIEF DESCRIPTION OF THE DRAWINGS

Fig. 1 is an unsaturated polyester FRP flow chart and an FRP technique flow chart according to the present invention for the comparison with each other.
Fig. 2 is a drawing which illustrates the polyurethane-based resin spray-up method according to the present invention.

### <Description of the Reference Signs>

(A): Application of mold release agent to open mold
(B): Application of gel layer (also called mold layer)
(C): FRP technique spray
(D): Demoulding

### DETAILED DESCRIPTION OF THE INVENTION

To facilitate demoulding of polyurethane resins which are generally highly adhesive, it has been a practice to use mold release agents such as silicone oil, natural or synthetic waxes (for example, earth wax) dissolved solvents (for example, turpentine) and aluminum stearate and lithium stearate dissolved in solvents (for example, a mixture of white spirit with butanol). As the gel layer, use may be made of urethane two component coatings, in particular, a urethane two component hardening gel layer comprising a non-yellowing aliphatic isocyanate (manufactured by Nippon Bee Chemical, main agent: R240-01, hardener: R-255, thinner: T-701).

The FRP technique according to the present invention is different from unsaturated polyester-reinforced plastics in the following points.

That is to say, the unsaturated polyester-reinforced plastics can be produced at a day's productivity of 1 to 2 shots per mold, while the FRP technique according to the present invention makes it possible to achieve a day's productivity of 5 to 8 shots per mold, i.e., several times higher. Moreover, the complicated and time-consuming step of defoaming is needed in the case of the unsaturated polyester-reinforced plastics, while this step can be omitted and thus the number of steps can be largely lessened in the present invention, thereby bringing about merits.

Since a two component reaction type quick-hardening urethane-based resin spray method is employed in the present invention, there arises no problem of public pollution due to the evolution of volatile components harmful to the human body. Further, a high adhesiveness can be achieved in the urethane two component coating step and thus the obtained products suffer from no peeling and show a very high commercial value.

According to the polyurethane-based resin spray-up method, i.e., the FRP technique of the present invention, furthermore, improvements have been successfully made by solving the problems occurring in the conventionally known polyurethane-base resin spray-up method as described above, namely, the deformation in parts with the passage of time due to the own weight because of the insufficient rigidity and strength; the insufficient strength of products due to the restriction in the content of glass fiber for reinforcing the plastic to 10% by weight or less; and the poor adhesiveness at the laminated part with the urethane two component coating.

For example, the content of the glass fiber can be elevated to 20% by weight or more in the present invention, which indicates that the process of the invention is superior both in the strength and the rigidity to the conventional methods.

The decisive difference of the polyurethane-based resin spray-up method, i.e., the FRP technique of the present invention from the conventional polyurethane-based resin spray-up method resides in that, in the step of mixing and reacting the urethane prepolymer with the polyol, either 2-methyl-1,4-diazabicyclo[2,2,2]octane or lead octylate is added as a catalyst in an amount of from 0.05 to 0.5% by weight based on the polyol so as to prevent a decrease in the viscosity to thereby control the hardening reaction time to 50 to 60 seconds. Thus, the reaction of hardening the urethane resin can be well balanced and the glass fiber chopped strands can be thoroughly mixed. In addition, the spray-up moulding can be facilitated thereby and the strength of the products can be remarkably improved.

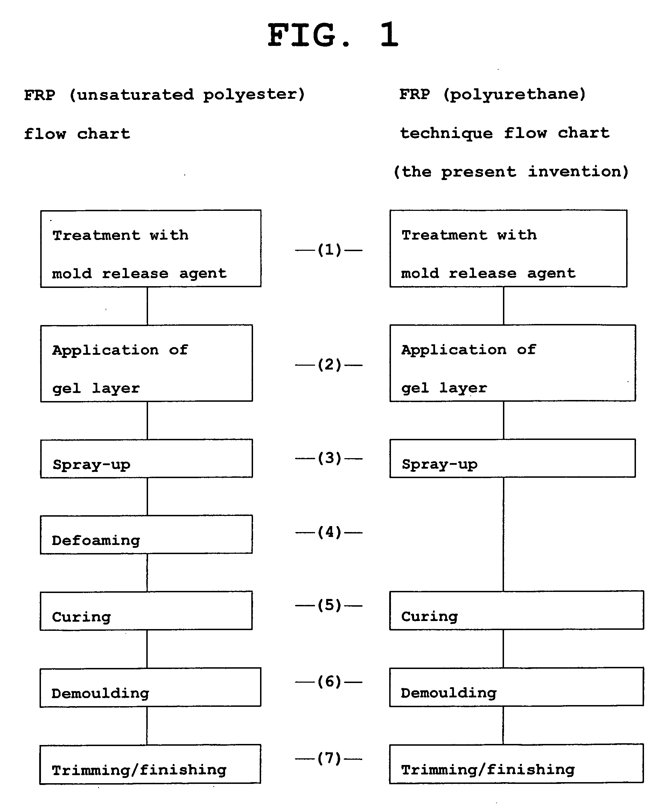

In the FIG. 1, an unsaturated polyester FRP flow chart and an FRP technique flow chart according to the present invention are compared to each other.

As FIG. 1 shows, the time-consuming and troublesome defoaming step (4) can be omitted in the process according to the present invention. Since the two component reaction type urethane-based resin spray method is employed in the present invention, furthermore, there arises no problem of public pollution due to the vaporization of solvents such as styrene monomer.

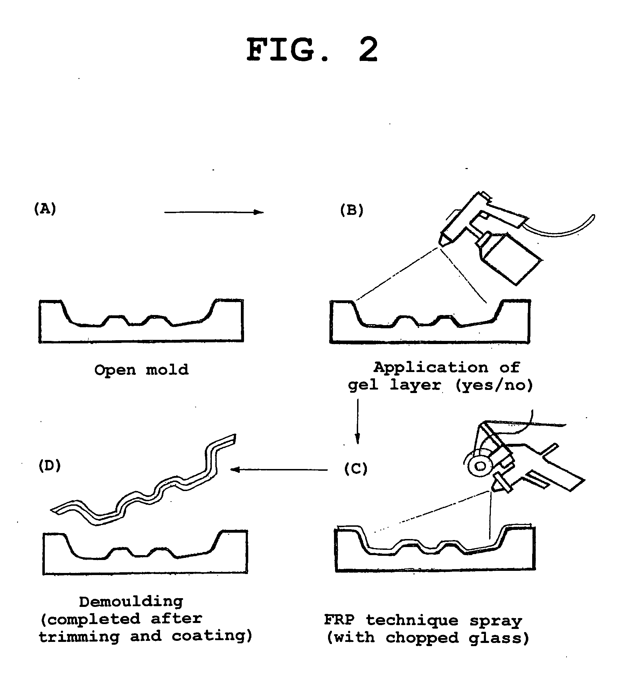

The FRP technique according to the invention is illustrated in the attached FIG. 2.

According to this FRP technique, a reinforced plastic can be efficiently produced by the polyurethane-based resin spray-up method with the use of the mere spray-up method simply by preparing either a male mold or a female mold.

The following Table 1 shows a comparison of reinforced plastics obtained by the polyurethane-based resin spray-up method according to the present invention with conventional glass fiber-reinforced unsaturated polyester plastics (FRPs). The polyurethane-based resin spray-up method according to the present invention makes it possible to maintain a sufficient strength in, for example, moulding automotive bumpers free from reinforcing glass fiber and the thus obtained products are superior in strength and rigidity to products made of polypropylene resins which are marketed in recent years.

In Table 1, HR01 stands for a hard type product, SR01 stands for a medium type product and SR02 stands for a soft type product.

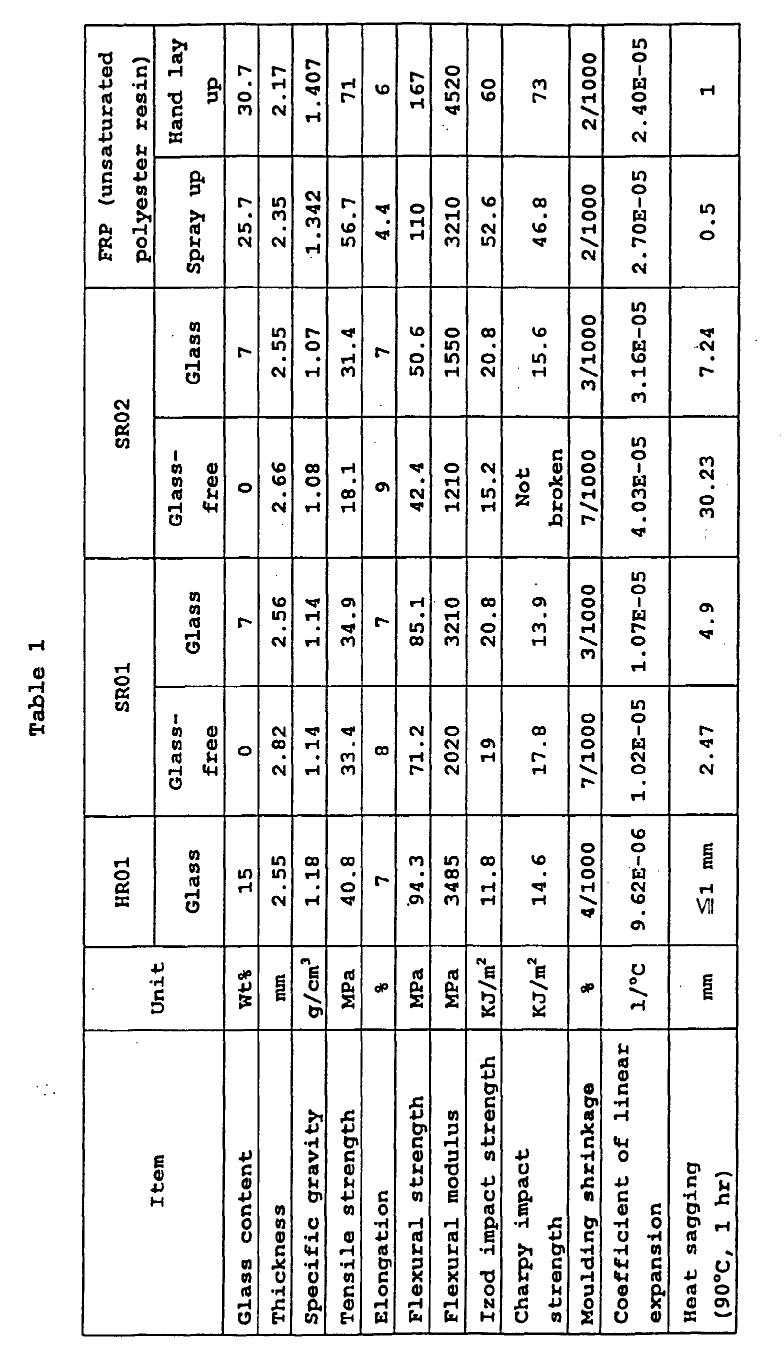

Now, the present invention will be described in greater detail by reference to the following example.

### EXAMPLE

As FIG. 2 shows, it is needed to prepare either a male mold or a female mold. It is possible to use a less expensive mold made of FRP (A). After applying a mold release agent thereto, a urethane two component hardening gel layer, in particular, a urethane two comonent hardening gel layer with the use of a non-yellowing aliphatic isocyanate (manufactured by Nippon Bee Chemical, main agent: R240-01, hardener: R-255, thinner: T-701) is applied as a gel layer (B) and hardened by allowing to stand at 40°C to 50°C for about 20 minutes.

In the next step (C), the polyurethane-based resin spray-up method is carried out by spraying onto the gel layer (mold layer) with the use of a two component urethane spray equipment, 110 parts by weight of polyphenylmethane polyisocyanate (polymeric MDI) as the isocyanate and 100 parts by weight of a mixture of, as the polyol, a polyether polyol- (average molecular weight: 1000) prepared by starting with glycerol and addition-polymerizing propylene oxide thereto, another polyether polyol (average molecular weight: 700) prepared by starting with propylene glycol and addition-polymerizing propylene oxide thereto, diethyltoluenediamine used as a crosslinking agent, zeolite used as a water absorbent and 2-methyl-1,4-diazabicyclo[2,2,2]octane used as a catalyst while adding glass fiber chopped strands by using a spray gun provided with a glass chopper to thereby perform spray-up moulding; after hardening for 50 seconds, curing at 40°C to 50°C for 15 to 35 minutes; and then demoulding followed by trimming and finishing.

The moulding is performed for about 1 hour. It is therefore noteworthy that a high productivity per mold, i.e., 5 to 8 times higher than the productivity in the case of unsaturated polyester-reinforced plastics (FRPs) can be thus achieved. Although the glass content (for example, 15% by weight based on the total weight in HR01) of the product according to the invention is considerably lower than the glass content in the unsaturated polyester-reinforced plastic (FRP) of the spray-up method (i.e., 25.7% by weight) shown in Table 1, the product of the invention is comparable or even superior in strength to the FRP in case of comparing at the same content level. As specific examples of the resin products, citation may be made of various articles such as side spoilers, covers for constructional machines and bathtubs.

In the polyurethane-based resin spray-up method performed hitherto, a liquid reaction mixture suffers from an instantaneous decrease in viscosity in the spray-up step and thus undergoes sagging before hardening. To prevent this sagging, the content of glass fiber is highly restricted. In case of adding much glass fiber, the polyurethane resin becomes less solid and thus only porous products with poor qualities can be obtained. However, attention should be paid to the fact that all of these problems can be overcome by adding a catalyst, which also serves as a viscosity controlling agent, as the catalyst according to the present invention.

As described above in detail, the polyurethane-based resin spray-up method with the use of a specific catalyst according to the present invention makes it possible to provide a reinforced plastic which is comparable or even superior in rigidity and strength to the conventional unsaturated polyester-reinforced plastics (FRPs) without resort to the time-consuming and troublesome defoaming step. Moreover, no toxic gas is evolved in this case. In addition, a decrease in the viscosity in the step of the spray-up of the mixture of a prepolymer with a polyol, as observed in the case of the conventional polyurethane-based resin spray-up method, can be prevented. As a result, specifically remarkable effects of solving the troubles occurring in the conventional products, for example, the insufficient rigidity and strength due to the restricted glass fiber content, deformation due to the own weight, the poor adhesiveness in the urethane two component coating, and the unfavorable qualities of the products can be established.
Also enclosed within the present invention as disclosed herein are the following aspects and embodiments:
(1) A process for the production of a polyurethane-based plastic article comprising the steps of:
   i) Providing a mold treated with a mold release agent,
   ii) applying a gel layer to the mold of step (i) and allow the gel to harden to a desired degree,
   iii) mixing an isocyanate component selected from an isocyanate and a prepolymer prepared from an isocyanate and a polyol, with a polyol component comprising a polyol and a catalyst,
   iv) applying the mixture of step (iii) to the mold by a spray-up molding method, and
   v) curing the mixture applied in step (iv).
(2) A method as in (1), wherein the polyurethane-based plastic article is a reinforced plastic article.
(3) A method as in (2), wherein the reinforcement is provided in form of glass fiber chopped strands, which are admixed with the resin material of step (iii) in the step of applying the mixture to the mold in step (iv) by using a spray gun provided with a glass chopper.
(4) A method as in any of (1)-(3), wherein in step (ii) the gel layer is cured at a temperature of 40-50°C, (preferably 43-47°C, most preferably about 45°C) for 10-30 minutes (preferably 15-25 minutes, most preferably about 20 minutes).
(5) A method as in any of (1)-(4), wherein in step (v) the mixture is cured at a temperature of 40-50°C (preferably 43-47°C, most preferably about 45°C) for 15-35 minutes (preferably 20-30 minutes, most preferably about 25 minutes).
(6) A method as in any of (1)-(5), further comprising after the curing step (v) any of the steps of demolding, trimming and/or finishing the cured plastic article.
(7) A method as in any of (1)-(6), wherein the catalyst present in the polyol component defined in step (iii) is selected from 2-methyl-1,4-diazabicyclo[2,2,2]octane and lead octoate.
(8) A method as in any of (1)-(7), wherein the isocyanate component defined in step (iii) is an isocyanate prepolymer obtained from an aliphatic or aromatic diisocyanate or isocyanate with a polyol.

Furthermore, it apparent to the skilled person, that in the production of urethane resins from isocyanates and polyols, diisocyanate monomers result in a linear progression of the polymer formation, while higher polyisocyanates allow for the formation of branched polymers and/or cross-linking. Monoisocyanate compounds result in the termination of the polymerization of a polymer molecule, and can therefore be used as a growth (molecular weight) regulator. It is to be understood that the isocyanate or isocyanate prepolymer used in the present invention may comprise any mixture of mono-, di- and higher polyisocyanates, provided that the mixture obtained in step (iii) of the process defined in (1) can be cured to obtain the desired polyurethane-based plastic article.

Also, the prepolymer prepared from an isocyanate and a polyol may comprise units derived from mono-, di- and higher polyisocyanates as defined above.

## Claims

1. A process for producing a reinforced plastic by the polyurethane-based resin spray-up method which comprises, in a process of producing a reinforced plastic comprising a polyurethane-based resin, treating a mold with a mold release agent, applying a gel layer thereto, hardening by allowing to stand at 40°C to 50°C for about 20 minutes and then spray-up moulding by using a two component urethane spray equipment, **characterized by**, in the step of mixing an isocyanate or a prepolymer, which is prepared from an isocyanate and a polyol, with a polyol, preliminarily adding a catalyst to the polyol component, spray-up moulding the blend by spraying onto a mold with the use of a spray gun provided with a glass chopper with or without adding glass fiber chopped strands, then curing as such at 40°C to 50°C for 15 to 35 minutes and demoulding followed by trimming and finishing.

2. The process for producing a reinforced plastic as claimed in claim 1 **characterized by**, in the step of mixing the prepolymer with the polyol, preliminarily adding as the catalyst 2-methyl-1,4-diazabicyclo[2,2,2]octane or lead octylate to the polyol component.

3. The process for producing a reinforced plastic as claimed in claim 1 **characterized in that** the isocyanate is an isocyanate prepolymer obtained by mixing or reacting an aliphatic or aromatic diisocyanate or isocyanate with a polyol.

4. The process for producing a reinforced plastic as claimed in claim 1 **characterized in that** the polyol is a polyester, a polyether polyol or a polyether polyamine for urethane such as a polyester, a polyether, an adipic acid-based polyester, a dimeric acid-based polyester, a diol, a triol, a tetraol or a hexaol.
